(19) **Europäisches Patentamt** / **European Patent Office** / **Office européen des brevets**

(11) **EP 1 519 115 B1**

(12) **EUROPÄISCHE PATENTSCHRIFT**

(45) Veröffentlichungstag und Bekanntmachung des Hinweises auf die Patenterteilung:
**30.07.2014   Patentblatt 2014/31**

(51) Int Cl.:
*F02C 3/22* *(2006.01)*   *F02C 7/22* *(2006.01)*
*F02C 9/40* *(2006.01)*   *F23R 3/36* *(2006.01)*

(21) Anmeldenummer: **04104422.3**

(22) Anmeldetag: **14.09.2004**

(54) **Verfahren zum Betrieb einer Gasturbine mit verschiedenen Brennstoffen, sowie Gasturbine**

Method of operating a gas turbine with different fuels, and gas turbine.

Méthode pour alimenter une turbine à gaz avec des carburants différents, et turbine à gaz

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.09.2003   DE 10345566**

(43) Veröffentlichungstag der Anmeldung:
**30.03.2005   Patentblatt 2005/13**

(73) Patentinhaber: **Alstom Technology Ltd**
**5400 Baden (CH)**

(72) Erfinder:
• **Rebhan, Dieter**
**79774, Albbruck (DE)**
• **Stalder, Marcel**
**5313, Klingnau (CH)**

(56) Entgegenhaltungen:
EP-A1- 0 351 094   WO-A1-99/04198
WO-A1-03/062618   US-A1- 2003 056 517

**Beschreibung**

TECHNISCHES GEBIET

Die vorliegende Erfindung bezieht sich auf das Gebiet der Technik von Gasturbinen. Sie betrifft ein Verfahren zum Betrieb einer Gasturbine gemäss dem Oberbegriff des Anspruchs 1 sowie eine Gasturbinenanlage zur Durchführung des Verfahrens.

STAND DER TECHNIK

Normalerweise sind bei Gasturbinen die Brenner wie z.B. der sog. EV-Brenner (Doppelkegelbrenner; siehe dazu beispielsweise die US-A-5,081,844) und der sog. SEV-Brenner (sekundärer EV-Brenner; siehe dazu beispielsweise den Artikel von F. Joos et al. Development of the sequential combustion system for the GT24/GT26 gas turbine family, ABB Review 4, p. 4-16 (1998) oder US-A-5,454,220) für den Volllastbetrieb ausgelegt. Trotzdem kann es nötig sein, dass die Gasturbine auch mit Teillast betrieben wird, sei es, weil das Netz die erzeugte Energie nicht aufnehmen kann, oder aber die Gasturbine an- und abgefahren wird (Reparaturen, etc.). Im Telllastbetrieb ergibt sich - wenn keine besonderen Massnahmen getroffen werden-ein ungünstiges Emissionsverhalten hinsichtlich CO und NOx. Ein weiteres Problem beim Teillastbetrieb einer Gasturbine betrifft den Ausbrand der relativ kühlen Abgase in relativ kurzen Brennkammern. Kalte Gase und kurze Aufenthaltszeiten resultieren in tiefen NOx Emissionen, leider aber auch in erhöhten CO/UHC Emissionen.

In der eingangs genannten Druckschrift US-A-5,081,844 wird vorgeschlagen, die Emissionsprobleme bei Teillast durch eine alternierende Anordnung von kleinen und grossen Vormischbrennern zu lösen, wobei die kleinen Vormischbrenner als Pilotbrenner arbeiten. In der eingangs genannten Druckschrift US-A-5,454,220 wird diese Lösung auf Gasturbinen mit SEV-Brenner übertragen.

Nachteilig ist bei dieser Art der Emissionsoptimierung im Teillastbetrieb, dass in der Hauptbrennkammer die dort eingesetzten Brenner speziell konfiguriert werden müssen, um einen entsprechenden Betrieb zu ermöglichen. Bei bereits bestehenden Gasturbinen ohne spezielle Brenneranordnung kann nachträglich auf diese Weise nur schwer eine Abhilfe bei Emissionsproblemen im Teillastbetrieb geschaffen werden.

Im Dokument EP 0 351 094 A1 ist ein Verfahren zum Betrieb einer Gasturbine beschrieben, welche bei Volllast mit einem ersten Brennstoff betrieben wird und bei Teillast mit einem zweiten Brenngas betrieben wird, um eine Verbesserung des Emisslonsverhaltens der Gasturbine zu erreichen, wobei das zweite Brenngas Dampf enthält.

Aus WO 03/062618 A1 ist ein Verfahren zum Betrieb einer Gasturbogruppe bekannt, bei dem fortwährend massgebliche Brenngaseigenschaften, vorzugsweise der C2+-Alkangehalt des Brenngases gemessen werden und in Abhängigkeit von den gemessenen Brenngaseigenschaftenunmittelbar auf die Betriebsparameter der Gasturbogruppe eingegriffen wird.

DARSTELLUNG DER ERFINDUNG

Es ist daher Aufgabe der Erfindung, ein Verfahren zum Betrieb einer Gasturbine anzugeben, weiches ohne bauliche Änderung an der Gasturbine selbst eine wesentliche Verbesserung des Emissionsverhaltens bei Teillastbetrieb erzielt, sowie eine Gasturbinenanlage zur Durchführung des Verfahrens zu schaffen.

Die Aufgabe wird durch die Gesamtheit der Merkmale der Ansprüche 1 und 17 gelöst. Der Kern der Erfindung besteht darin, dass die Gasturbine, welche bei Volllast mit einem ersten Brennstoff betrieben wird, bei Teillast zur Verbesserung des Emissionsverhaltens mit einem zweiten Brennstoff betrieben wird, welcher gegenüber dem ersten Brennstoff einen grösseren Anteil an höherwertigen Kohlenwasserstoffen (C2+) mit 2 und mehr Kohlenstoffatomen pro Molekül wie z.B. Ethan ($C_2H_6$) und Propan ($C_3H_8$) aufweist (die höherwertigen Kohlenwasserstoffe werden nachfolgend mit dem Kürzel C2+ bezeichnet).

Bevorzugt werden als erster und zweiter Brennstoff gasförmige Brennstoffe verwendet.

Grundsätzlich ist es dabei denkbar, dass zur Bereitstellung des ersten und der zweiten Brennstoffs zwei getrennte Gasquellen mit hinsichtlich der höherwertigen Kohlenwasserstoffe (C2+) unterschiedlicher Gaszusammensetzung verwendet werden, wobei insbesondere die beiden Brennstoffe direkt aus den Gasquellen bezogen werden, und beim Übergang zwischen Volllast und Teillast zwischen der Gasquelle mit dem geringeren Anteil an höherwertigen Kohlenwasserstoffen (C2+) und der Gasquelle mit dem höheren Anteil an höherwertigen Kohlenwasserstoff (C2+) umgeschaltet wird. Alternativ dazu können die beiden Brennstoffe aber auch durch eine unterschiedliche Mischung der Gase aus den beiden Gasquellen erzeugt werden.

Alternativ dazu ist es möglich, dass der erste Brennstoff aus dem zweiten Brennstoff durch Abtrennung von höherwertigen Kohlenwasserstoffen (C2+) erzeugt wird. Besonders günstig gestaltet sich das Verfahren, wenn die abgetrennten höherwertigen Kohlenwasserstoffe (C2+) zwischengespeichert und im Teillastbetrieb dem zweiten Brennstoff zugesetzt werden. Dabei kann es aus Platzgründen von Vorteil sein, dass die abgetrennten höherwertigen Kohlenwasserstoffe (C2+) vor der Zwischenspeicherung verflüssigt, als Flüssiggas zwischengespeichert und vor dem Zusetzen verdampft werden.

Eine andere Alternative ist dadurch gekennzeichnet, dass der zweite Brennstoff aus dem ersten Brennstoff durch Zusetzen von höherwertigen Kohlenwasserstoffen (C2+) erzeugt wird. Die zugesetzten höherwertigen Kohlenwasserstoffe können dabei einem lokalen Speicher entnommen werden, der entweder ein Flüssiggastank ist, wobei das dem Flüssiggastank entnommene Flüssiggas vor dem Zusetzen in einem Verdampfer verdampft wird, oder ein Gasspeicher ist.

Weiterhin ist es möglich, dass der erste und zweite Brennstoff aus einem dritten Brennstoff erzeugt werden, welcher in seinem Gehalt an höherwertigen Kohlewasserstoffen (C2+) zwischen dem ersten und zweiten Brennstoff liegt, und dass der erste und zweite Brennstoff aus dem dritten Brennstoff durch Abtrennen bzw. Zusetzen von höherwertigen Kohlenwasserstoffen (C2+) erzeugt werden, wobei vorzugsweise die vom dritten Brennstoff bei der Erzeugung des ersten Brennstoffes abgetrennten höherwertigen Kohlenwasserstoffe (C2+) zwischengespeichert und bei Erzeugung des zweiten Brennstoffes ausgespeichert und dem dritten Brennstoff zugesetzt werden. Dabei kann es wiederum aus Platzgründen vorteilhaft sein, dass die abgetrennten höherwertigen Kohlenwasserstoffe (C2+) vor der Zwischenspeicherung verflüssigt, als Flüssiggas zwischengespeichert und vor dem Zusetzen verdampft werden.

Vorzugsweise ist der Anteil an höherwertigen Kohlenwasserstoffen (C2+) beim zweiten Brennstoff etwa 10% bis 30% höher ist als beim ersten Brennstoff.

Die erfindungsgemässe Gasturbinenanlage ist dadurch gekennzeichnet, dass die Mittel zur gesteuerten Veränderung der Zusammensetzung des durch die Hauptbrennstoffzuleitung strömenden Brennstoffs eine in die Hauptbrennstoffzuleitung mündende Zusatzbrennstoffzuleitung umfassen, welche mit einem höherwertige Kohlenwasserstoffe (C2+) enthaltenden Speicher verbunden ist. In einer bevorzugten Ausgestaltung ist in der Zusatzbrennstoffzuleitung ein steuerbares Ventil zur Einstellung des durch die Zusatzbrennstoffzuleitung strömenden Gasstromes angeordnet.

Der die höherwertige Kohlenwasserstoffe (C2+) enthaltende Speicher kann dabei als Gasspeicher ausgebildet sein. Er kann aber auch als Flüssiggasspeicher ausgebildet sein, wobei in der Zusatzbrennstoffzuleitung ein Verdampfer angeordnet ist.

Vorzugsweise ist in der Hauptbrennstoffzuleitung eine Gasaufbereitungsanlage angeordnet, welche aus dem durch die Hauptbrennstoffzuleitung strömenden Gas höherwertige Kohlenwasserstoffe (C2+) abtrennt und an den höherwertige Kohlenwasserstoffe (C2+) enthaltenden Speicher abgibt. Besonders platzsparend ist es, wenn der die höherwertigen Kohlenwasserstoffe (C2+) enthaltende Speicher als Flüssiggasspeicher ausgebildet ist, und wenn zwischen der Gasaufbereitungsanlage und dem Flüssiggasspeicher eine Gasverflüssigungsanlage angeordnet ist.

Weitere Ausgestaltungen ergeben sich aus den abhängigen Ansprüchen.

## KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    ein vereinfachtes Schema eines ersten bevorzugten Ausführungsbeispiels einer Gasturbinenanlage nach der Erfindung, mit welcher das erfindungsgemäss Verfahren durchgeführt werden kann;

Fig. 2    ein vereinfachtes Schema eines zweiten bevorzugten Ausführungsbeispiels einer Gasturbinenanlage nach der Erfindung mit der zugehörigen lastabhängigen Regelung, mit welcher das erfindungsgemäss Verfahren durchgeführt werden kann; und

Fig. 3    in einem vergrösserten Ausschnitt die Reglerblöcke der in Fig. 2 dargestellten lastabhängigen Regelung.

## WEGE ZUR AUSFÜHRUNG DER ERFINDUNG

Die vorliegende Erfindung geht davon aus, dass durch Zugabe von $C_2H_6$ und höhermolekularen Kohlenwasserstoffen (C2+) das Emissionsverhalten der Gasturbine positiv beeinflusst wird. Speziell die CO-Emissionen können so über einen weitaus grösseren Teillastbereich als zurzeit möglich unter den zu garantierenden Emissionswerten gehalten werden. Darüber hinaus ist auch ein positiver Einfluss auf die Löschgrenze feststallbar, was sich wiederum in tieferen NOx Emissionen niederschlägt.

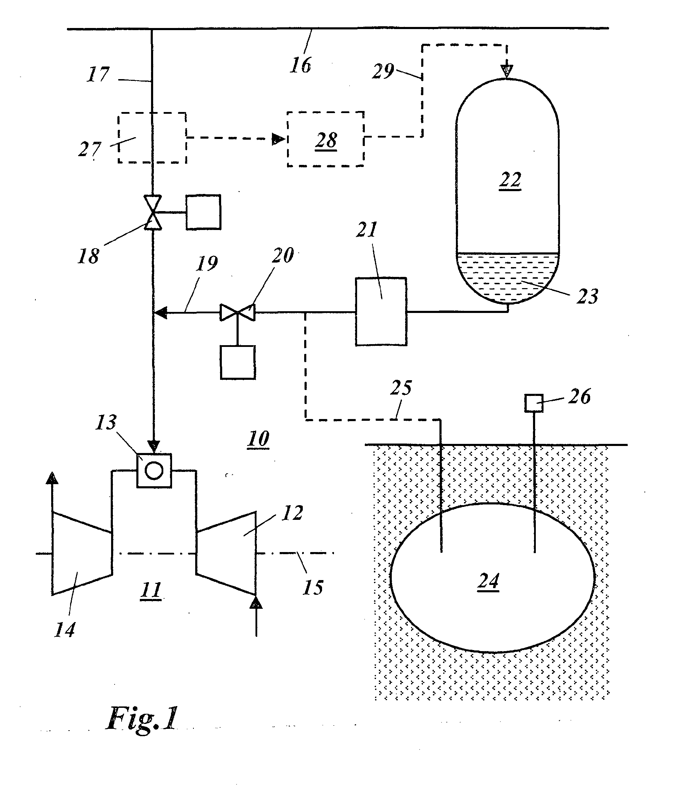

Eine dazu geeignete Gasturbinenanlage ist in einem vereinfachten Schema in Fig. 1 wiedergegeben. Die Gasturbinenanlage 10 umfasst eine Gasturbine 11, die in üblicher Weise aus einem Verdichter 12, einer Brennkammer und einer Turbine 14 besteht. Verdichter 12 und Turbine 14 sind auf einer gemeinsamen Welle 15 angeordnet, über die ein in Fig. 1 nicht gezeigter Generator zur Stromerzeugung angetrieben wird. Im Betrieb saugt der Verdichter 12 Luft an, verdichtet sie und speist sie in die Brennkammer 13 ein, wo sie mit einem beispielsweise gasförmigen Brennstoff vermischt und das Gemisch verbrannt wird. Die heissen Verbrennungsgase aus der Brennkammer werden in der Turbine unter Arbeitsleistung entspannt und anschliessend (z.B. in einem Abhitzedampferzeuger HRSG) weiterverwertet oder nach aussen abgegeben. Der in der Brennkammer 13 benötigte Brennstoff wird einer Brennstoffleitung 16 (z.B. einer Erdgaspipeline oder dgl.) entnommen und über eine Hauptbrennstoffzuleitung 17 der Brennkammer 13 zugeführt. Die Zufuhr kann über eine erstes steuerbares Ventil 18 gesteuert werden.

In die Hauptbrennstoffzuleitung 17 mündet eine Zusatzbrennstoffzuleitung 19, die über ein zweites steuerbares Ventil 20 und einen Verdampfer 21 mit einem Flüssiggastank 22 in Verbindung steht. In dem Flüssiggastank 22 befindet sich Flüssiggas 23 in Form von verflüssigten höherwertigen Kohlenwasserstoffen (C2+).

Der Flüssiggastank 22 kann entweder von aussen befüllt werden oder steht - wie in Fig. 1 gestrichelt eingezeichnet ist - über eine Gasverflüssigungsanlage 28 mit einer Gasaufbereitungsanlage 27 in Verbindung. Die Gasaufbereitungsanlage 27 ist in der Hauptbrennstoffzuleitung 17 angeordnet und so ausgelegt, dass sie dem durch die Hauptbrennstoffzuleitung 17 strömenden gasförmigen Brennstoff in einem vorgegebenen Mass die höherwertige Kohlenwasserstoffe (C2+) entziehen kann.

Alternativ zum Flüssiggastank 22 kann ein (z.B. unterirdischer) Gasspeicher 24 als Speicher für die höherwertigen Kohlenwasserstoffe vorgesehen sein, der über eine Füllvorrichtung 26 beispielsweise mittels eines Flüssiggastankers mit nachgeschalteter Verdampfung gefüllt werden kann.

Der Betrieb der Gasturbinenanlage 10 lässt sich wie folgt beschreiben: Die Gasturbine 11 wird mit dem normalerweise verfügbaren, meist gasförmigen, Brennstoff aus der Brennstoffleitung gestartet und an das Netz gefahren im sogenannten Pilotbetrieb. Sobald die Gasturbine 11 an das Netz gekoppelt ist und zunehmend Leistung ans Netz abgibt, werden dem Brennstoff höherwertige Kohlenwasserstoffe (Ethan $C_2H_6$, Propan $C_3H_8$, etc.) zugemischt. Dieser Zusatz von sog. C2+ Gas (mit 2 und mehr C-Atomen) wird aus dem Flüssiggastank 22 über den Verdampfer 21 geleitet und dem Hauptbrennstoff zugemischt. Es wird ein C2+ Gasanteil von ca. 10 bis 30% geregelt dazugegeben. Alternativ kann das C2+ Gas aus dem Gasspeicher 24 dem Brennstoff zugeregelt werden.

Wird nun eine entsprechend hohe Flammentemperatur erreicht, wird in den sogenannten Premixbetrieb geschaltet. Die sogenannte Umschalttemperatur, bei der in den Premixbetrieb geschaltet werden kann, ist stark davon abhängig, bei welchem (C2+)-Gasgehalt die Gasturbine 11 betrieben wird. Je höher der (C2+)-Gasgehalt ist, desto tiefer kann die Umschalttemperatur angesetzt werden. Der Vorteil dieses Betriebsverfahren ist, dass der Lastbereich mit Premixbetrieb und damit mit tiefer NOx-Emission durch die Zugabe von (C2+)-Gas stark vergrössert wird und dadurch die Gesamt-NOx-Emissionsfracht durch den Betrieb der Gasturbine 11 deutlich reduziert wird.

Wie bereits eingangs erwähnt, betrifft ein weiteres Problem beim Teillastbetrieb einer Gasturbine den Ausbrand der relativ kühlen Abgase in relativ kurzen Brennkammern. Kalte Gase und kurze Aufenthaltszeiten resultieren in tiefen NOx-Emissionen, leider aber auch in erhöhten CO/UHC-Emissionen (UHC= Unburned Hydro Carbons).

Doch auch hier zeigt sich, dass durch die Zugabe von (C2+)-Gas zum Brennstoff der Ausbrand der Abgase beschleunigt abläuft. Trotz relativ kurzen Brennkammern mit entsprechend kurzen Verweilzeiten wird das giftige Kohlenmonoxid über einen weitaus grösseren Teillastbereich zu ungiftigem $CO_2$ reduziert.

Mit steigender Last nähern sich die Verbrennungstemperaturen den Vollastbetriebstemperaturen.

Die Brennkammer 13, welche für den Vollastbetrieb ausgelegt ist, hat nun genügend heisse Temperaturen, der Ausbrand von CO zu $CO_2$ läuft in einer Zeit ab, die kürzer ist als die Verweildauer der Abgase in der Brennkammer 13. Dementsprechend kann der (C2+)-Gasgehalt im Brennstoff mit steigender Last reduziert werden, bis sich eine (C2+)-Gaszugabe aus dem Flüssiggastank 22 oder dem Gasspeicher 24 erübrigt.

Am einfachsten lässt sich ein Flüssiggastank 22 befüllen. Entsprechende Infrastrukturen zum Befüllen von Flüssiggasspeichern sind bekannt und müssen hier nicht weiter beschrieben werden (Zulieferung von Flüssiggas mit Tankschiff/LKW, etc.). Auch ein Gasspeicher 24 kann mit Flüssiggas beliefert werden. Vor der Beschickung des Gasspeichers 24 über die Füllvorrichtung 26 wird das Flüssiggas über einen Verdampfer in den gasförmigen Zustand zurückgeführt

Es ist bei einer Gasturbinenanlage 10 gemäss Fig. 1 aber auch eine andere Vorgehensweise denkbar: Erdgase als Hauptbrennstoffe für Gasturbinen enthalten unterschiedlichste Zusammensetzungen, je nach dem Ort, wo sie gefördert werden. Jedes Gas zeigt entsprechend seiner Herkunft und Zusammensetzung ein unterschiedliches Brennverhalten und nicht alle 'Gastypen' können gleich verbrannt werden. Entsprechende Vorschriften verlangen andererseits, dass die Emissionen über entsprechend grösstmögliche Betriebsbereiche in engen Grenzen gehalten werden.

Diese Forderung kann nicht eingehalten werden, wenn unterschiedliche Gase in gleicher Weise verbrannt werden. Umgekehrt aber ist es möglich, für ein genau definiertes Gas das Verbrennungssystem optimal auszulegen und zu betreiben. Entsprechend muss aber dafür gesorgt werden, dass das zu verbrennende Gas der zugrunde gelegten Definition für den Auslegungspunkt entspricht. Dies ist mittels einer Aufbereitung des Brennstoffgases zu bewerkstelligen. In der Hauptbrennstoffzuleitung 17 zur Gasturbine 11 ist dazu eine Gasaufbereitungsanlage 27 eingebaut (gestrichelt in Fig. 1), welche dafür sorgt, dass ein der Spezifikation entsprechendes Brennstoffgas der Gasturbine 11 zugeführt wird, Ein Zuviel an (C2+)-Gasen wird im Vollastbetrieb der Gasturbine 11 dem Gas entzogen, in einer Gasverflüssigungsanlage 28 verflüssigt und über eine Füllleitung 29 im Flüssiggastank 22 zwischengelagert, solange bis die Gasturbine 11 im Teillastbereich betrieben wird/werden muss und anstelle eines (C2+)-Überschusses ein (C2+)-Mangel kompensiert werden muss. Das entzogene Gas kann aber auch über eine Zuleitung 25 einem geeignet ausgelegten unterirdischen Gasspeicher 24 zugeführt werden, Während des entsprechenden Teillastbetriebes wird der Gasspeicher 24 oder der Flüssiggastank 22 entladen. Entsprechend den zu erwartenden Teillaststunden, Vollaststunden und Gaszusammensetzungen ist eine ausreichende Grösse des Zwischenspeichers 22, 24 zu wählen.

Werden verschiedene Gasquellen mit unterschiedlichen Gaszusammensetzungen zum Betrieb der Gasturbine verwendet, ist es weiterhin möglich, dass die Zwischenspeicher (Flüssiggastank oder Gasspeicher) kleiner gewählt werden. Während des Teillastbetriebes wird bei leeren Zwischenspeichern mit dem (C2+)-reicheren Brennstoffgas die Gasturbine betrieben, bei Volllast (oder entsprechend hoher Teillast) wird auf die (C2+)-ärmere Gasquelle umgeschaltet oder aber es wird bei Volllast mit dem C2+ reichen Gas die Gasturbine betrieben und über eine Gasaufbereitungsanlage wiederum überschüssiges (C2+)-Gas separiert und dem Zwischenspeicher zugeführt. Beim Betrieb mit zwei Gasquellen kann es zudem mitunter vorteilhaft sein, wenn die zwei Gase in einem bestimmten Verhältnis gemischt und der Gasturbine zugeführt werden, entsprechend dem gerade benötigen (C2+)-Gehalt, um den jeweiligen Betriebspunkt optimal (tiefe CO- und tiefe NOx-Emissionen) fahren zu können.

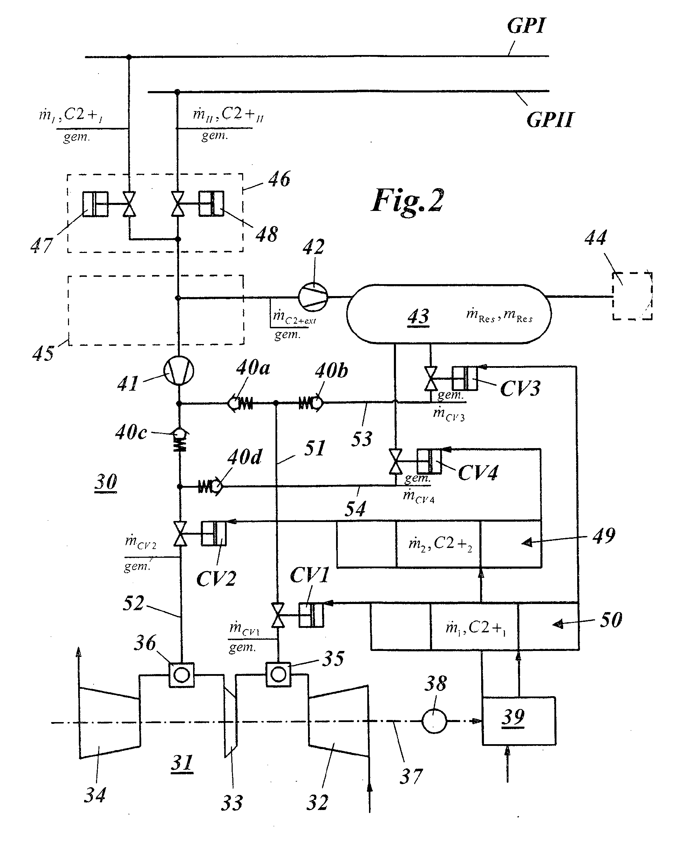

Eine mit zwei Gasquellen arbeitende Gasturbinenanlage ist in Fig. 2 beispielhaft wiedergegeben. Die Gasturbinenanlage 30 der Fig. 2 umfasst eine Gasturbine 31 mit einem Verdichter 32, zwei Brennkammern 35 und 36, einer dazwischen angeordneten ersten Turbine 33 und einer zweiten Turbine 34. Die Turbinen 33, 34 und der Verdichter 32 sind auf einer gemeinsamen Welle 37 angeordnet, die einen Generator 38 antreibt. Die Konfiguration entspricht der in der US-A-5,454,220 gezeigten. Die Brennkammern 35, 36 werden jeweils über eine Hauptbrennstoffzuleitung 51, 52 aus zwei Gasquellen in Form von zwei Gaspipelines GPI und GPII mit gasförmigen Brennstoffen versorgt. In einer vorgeschalteten Mischeinrichtung 46 mit zwei Regelventilen 47, 48 kann eine vorgegebene Mischung beider Brennstoffe hergestellt oder von einem auf den anderen Brennstoff umgestellt werden. In einer nachfolgenden Gasaufbereitungsanlage 45 können (C2+)- Anteile abgetrennt und über einen Verdichter 42 in einem Speicher 43 eingespeichert werden. Der so aufbereitete Brennstoff wird in einem Verdichter 41 komprimiert und über die beiden Hauptbrennstoffzuleitungen 51, 52 zu den Brennkammern 35, 36 geführt. An jeder der beiden Hauptbrennstoffzuleitungen 51, 52 können über eine Zusatzbrennstoffzuleitung 53, 54 und ein System von Rückschlagventilen 40a,..,d und Regelventilen CV3, CV4 höherwertige Kohlenwasserstoffe (C2+) aus dem Speicher 43 zugesetzt werden. Der Brennstoffmassenstrom in der jeweiligen Hauptbrennstoffzuleitung 51, 52 lässt sich durch ein Regelventil CV1 bzw. CV2 steuern. Der Speicher 43 kann auch durch eine Füllstation 44 extern befüllt werden.

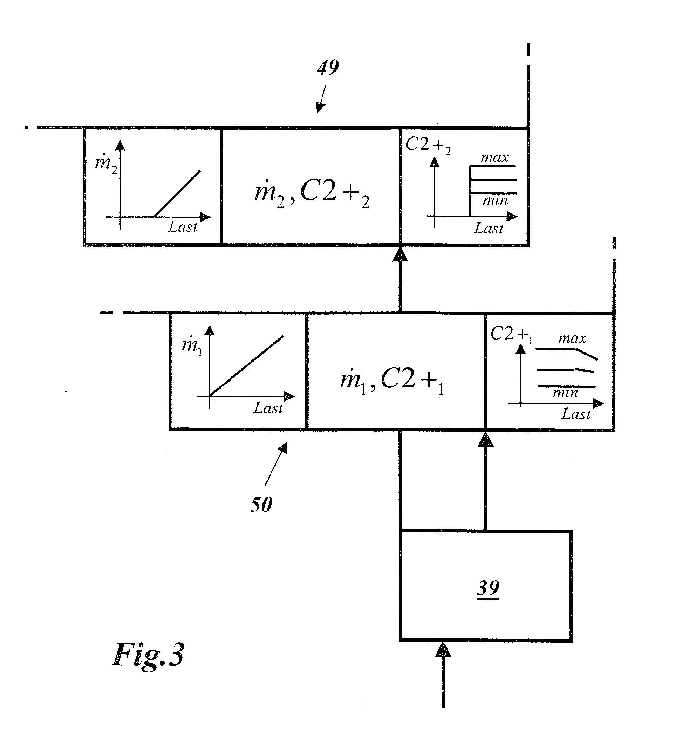

Die Regelung der verschiedenen in Fig. 2 eingezeichneten und an den jeweiligen Orten gemessenen Brennstoffmassenströme ($\dot{m}_x$, x = I,II,1,2,CV1,..,CV4;C2+ext,Res) erfolgt durch einen Lastregler 39 nach Massgabe der vom Netz angeforderten Leistung bzw. Last über zwei Regeleinrichtungen 49, 50, die einerseits über die Regelventile CV1 und CV2 den gesamten Brennstoffmassenstrom pro Brennkammer 35, 36 regeln, und andererseits über die Regelventile CV3 und CV4 die Zugabe von (C2+)-Anteilen zum Brennstoff steuern. Die zugehörigen beispielhaften Regelkurven sind in der vergrösserten Darstellung der Regeleinrichtungen 49, 50 in Fig. 3 eingezeichnet. Dabei gelten die folgenden Beziehungen:

$$\dot{m}_{CV1} = f(Last)$$

$$\dot{m}_{CV2} = f(Last)$$

$$\dot{m}_I + \dot{m}_{II} - \dot{m}_{C2+ext} = \dot{m}_{CV1} + \dot{m}_{CV2}$$

$$\dot{m}_{Res} = \dot{m}_{C2+ext} - \dot{m}_{CV3} - \dot{m}_{CV4}$$

$$m_{Res} = \int \dot{m}_{Res} \cdot dt \,.$$

BEZUGSZEICHENLISTE

| | |
|---|---|
| 10,30 | Gasturbinenanlage |
| 11,31 | Gasturbine |
| 12,32 | Verdichter |
| 13,35,36 | Brennkammer |
| 14,33,34 | Turbine |
| 15,37 | Welle |
| 16 | Brennstoffleitung |
| 17,51,52 | Hauptbrennstoffzuleitung |
| 18,20 | Ventil |
| 19,53,54 | Zusatzbrennstoffzuleitung |
| 21 | Verdampfer |
| 22 | Flüssiggastank |
| 23 | Flüssiggas |
| 24 | Gasspeicher |
| 25 | Zuleitung |
| 26 | Füllvorrichtung |
| 27,45 | Gasaufbereitungsanlage |
| 28 | Gasverflüssigungsanlage |
| 29 | Füllleitung |
| 38 | Generator |
| 39 | Lastregler |
| 40a,..,d | Rückschlagventil |
| 41,42 | Verdichter |
| 43 | Speicher |
| 44 | Füllstation |
| 46 | Mischeinrichtung |
| 47,48 | Regelventil |
| 49,50 | Regeleinrichtung |
| CV1,..,CV4 | Regelventil |
| GPI,GPII | Gaspipeline |

**Patentansprüche**

1. Verfahren zum Betrieb einer Gasturbine (11, 31), welche bei Volllast mit einem ersten Brennstoff betrieben wird, wobei die Gasturbine (11, 31) bei Teillast zur Verbesserung des Emissionsverhaltens mit einem zweiten Brennstoff betrieben wird, **dadurch gekennzeichnet, dass** der zweite Brennstoff gegenüber dem ersten Brennstoff einen grösseren Anteil an höherwertigen Kohlenwasserstoffen (C2+) mit 2 und mehr Kohlenstoffatomen pro Molekül wie z.B. Ethan ($C_2H_6$) und Propan ($C_3H_8$) aufweist.

2. Verfahren nach Anspruch 1, **dadurch gekennzeichnet, dass** als erster und zweiter Brennstoff gasförmige Brennstoffe verwendet werden.

3. Verfahren nach Anspruch 2, **dadurch gekennzeichnet, dass** zur Bereitstellung des ersten und der zweiten Brennstoffs zwei getrennte Gasquellen (GPI, GPII) mit hinsichtlich der höherwertigen Kohlenwasserstoffe (C2+) unterschiedlicher Gaszusammensetzung verwendet werden.

4. Verfahren nach Anspruch 3, dadurch gekenntzeichnet, dass die beiden Brennstoffe direkt aus den Gasquellen (GPI, GPII) bezogen werden, und dass beim Übergang zwischen Volllast und Teillast zwischen der Gasquelle mit dem geringeren Anteil an höherwertigen Kohlenwasserstoffen (C2+) und der Gasquelle mit dem höheren Anteil an höherwertigen Kohlenwasserstoff (C2+) umgeschaltet wird.

5. Verfahren nach Anspruch 3, **dadurch gekennzeichnet, dass** die beiden Brennstoffe durch eine unterschiedliche Mischung der Gase aus den beiden Gasquellen (GPI, GPII) erzeugt werden.

6. Verfahren nach Anspruch 2, **dadurch gekennzeichnet, dass** der erste Brennstoff aus dem zweiten Brennstoff durch Abtrennung von höherwertigen Kohlenwasserstoffen (C2+) erzeugt wird.

7. Verfahren nach Anspruch 6, **dadurch gekennzeichnet, dass** die abgetrennten höherwertigen Kohlenwasserstoffe (C2+) zwischengespeichert und im Teillastbeleeb dem zweiten Brennstoff zugesetzt werden.

8. Verfahren nach Anspruch 7, **dadurch gekennzeichnet, dass** die abgetrennten höherwertigen Kohlenwasserstoffe (C2+) vor der Zwischenspeicherung verflüssigt, als Flüssiggas zwischengespeichert und vor dem Zusetzen verdampft werden.

9. Verfahren nach Anspruch 2, **dadurch gekennzeichnet, dass** der zweite Brennstoff aus dem ersten Brennstoff durch Zusetzen von höherwertigen Kohlenwasserstoffen (C2+) erzeugt wird.

10. Verfahren nach Anspruch 9, **dadurch gekennzeichnet, dass** die zugesetzten höherwertigen Kohlenwasserstoffe einem lokalen Speicher (22, 24, 43) entnommen werden.

11. Verfahren nach Anspruch 10, **dadurch gekennzeichnet, dass** der lokale Speicher ein Flüssiggastank (22) ist, und dass das dem Flüssiggastank (22) entnommene Flüssiggas vor dem Zusetzen in einem Verdampfer (21) verdampft wird.

12. Verfahren nach Anspruch 10, **dadurch gekennzeichnet, dass** der lokale Speicher ein Gasspeicher (24) ist.

13. Verfahren nach Anspruch 2, **dadurch gekennzeichnet, dass** der erste und zweite Brennstoff aus einem dritten Brennstoff erzeugt werden, weicher in seinem Gehalt an höherwertigen Kohlewasserstoffen (C2+) zwischen dem ersten und zweiten Brennstoff liegt, und dass der erste und zweite Brennstoff aus dem dritten Brennstoff durch Abtrennen bzw. Zusetzen von höherwertigen Kohlenwasserstoffen (C2+) erzeugt werden.

14. Verfahren nach Anspruch 13, **dadurch gekennzeichnet, dass** die vom dritten Brennstoff bei der Erzeugung des ersten Brennstoffes abgetrennten höherwertigen Kohlenwasserstoffe (C2+) zwischengespeichert und bei Erzeugung des zweiten Brennstoffes ausgespeichert und dem dritten Brennstoff zugesetzt werden.

15. Verfahren nach Anspruch 14, **dadurch gekennzeichnet, dass** die abgetrennten höherwertigen Kohlenwasserstoffe (C2+) vor der Zwischenspeicherung verflüssigt, als Flüssiggas zwischengespeichert und vor dem Zusetzen verdampft werden.

16. Verfahren nach einem der Ansprüche 1 bis 15, **dadurch gekennzeichnet, dass** der Anteil an höherwertigen Kohlenwasserstoffen (C2+) beim zweiten Brennstoff etwa 10% bis 30% höher ist als beim ersten Brennstoffs

17. Gasturbinenanlage (10, 30) zur Durchführung des Verfahrens nach Anspruch 1, umfassend eine Gasturbine (11, 31) mit einem Verdichter (12, 32) wenigstens einer Brennkammer (13, 35, 36) und wenigstens einer Turbine (14, 33, 34), sowie einer Hauptbrennstoffzuleitung (17, 51, 52), welche von einer Brennstoffquelle (16, GPI, GPII) zu der wenigstens einen Brennkammer (13, 35, 36) führt, wobei Mittel zur gesteuerten Veränderung der Zusammensetzung des durch die Hauptbrennstoffzuleitung (17, 51, 52) strömenden Brennstoffs vorgesehen sind,

**EP 1 519 115 B1**

---

**dadurch gekennzeichnet, dass** die Mittel eine in die Hauptbrennstoffzuleitung (17, 51, 52) mündende Zusatzbrennstoffzuleitung (19, 53, 54) umfassen, welche mit einem höherwertige Kohlenwasserstoffe (C2+) enthaltenden Speicher (22, 24, 43) verbunden ist.

**18.** Gasturbinenanlage nach Anspruch 17, **dadurch gekennzeichnet, dass** in der Zusatzbrennstoffzuleitung (19, 53, 54) ein steuerbares Ventil (20; CV3, CV4) zur Einstellung des durch die Zusatzbrennstoffzuleitung (19, 53, 54) strömenden Gasstromes angeordnet ist.

**19.** Gasturbinenanlage nach einem der Ansprüche 17 oder 18, **dadurch gekennzeichnet, dass** der höherwertige Kohlenwasserstoffe (C2+) enthaltende Speicher als Gasspeicher (24) ausgebildet ist

**20.** Gasturbinenanlage nach einem der Ansprüche 17 oder 18, **dadurch gekennzeichnet, dass** der höherwertige Kohlenwasserstoffe (C2+) enthaltende Speicher als Flüssiggasspeicher (22) ausgebildet ist, und dass in der Zusatzbrennstoffzuleitung (19) ein Verdampfer (21) angeordnet ist.

**21.** Gasturbinenanlage nach einem der Ansprüche 17 bis 20, **dadurch gekennzeichnet, dass** in der Hauptbrennstoffzuleitung (17, 51, 52) eine Gasaufbereitungsanlage (27, 45) angeordnet ist, welche aus dem durch die Hauptbrennstoffzuleitung (17, 51, 52) strömenden Gas höherwertige Kohlenwasserstoffe (C2+) abtrennt und an den höherwertige Kohlenwasserstoffe (C2+) enthaltenden Speicher (22, 24, 43) abgibt.

**22.** Gasturbinenanlage nach Anspruch 21, **dadurch gekennzeichnet, dass** der höherwertige Kohlenwasserstoffe (C2+) enthaltende Speicher als Flüssiggasspeicher (22) ausgebildet ist, und dass zwischen der Gasaufbereitungsanlage (27) und dem Flüssiggasspeicher (22) eine Gasverflüssigungsanlage (28) angeordnet ist.

**23.** Gasturbinenanlage nach einem der Ansprüche 17 bis 22, **dadurch gekennzeichnet, dass** ein Lastregler (39) vorhanden ist, welcher die Veränderung der Zusammensetzung des durch die Hauptbrennstoffzuleitung (17, 51, 52) strömenden Brennstoffs nach Massgabe der geforderten Gasturbinenleistung regelt.

## Claims

**1.** Method for operating a gas turbine (11, 31) which is operated using a first fuel when under full load, wherein, in order to improve the emissions behaviour, the gas turbine (11, 31) is operated using a second fuel when under partial load, **characterized in that** the second fuel, in comparison with the first fuel, has a higher fraction of higher-value hydrocarbons (C2+) having 2 or more carbon atoms per molecule, such as ethane ($C_2H_6$) and propane ($C_3H_8$).

**2.** Method according to Claim 1, **characterized in that** gaseous fuels are used as the first and as the second fuel.

**3.** Method according to Claim 2, **characterized in that**, in order to prepare the first and the second fuel, two separate gas sources (GPI, GPII) are used, which have different gas compositions with respect to the higher-value hydrocarbons (C2+).

**4.** Method according to Claim 3, **characterized in that** the two fuels are drawn directly from the gas sources (GPI, GPII) and **in that**, at the transition between full load and partial load, a switch is made between the gas source with the lower fraction of higher-value hydrocarbons (C2+) and the gas source with the higher fraction of higher-value hydrocarbons (C2+).

**5.** Method according to Claim 3, **characterized in that** the two fuels are produced by means of a different mix of the gases from the two gas sources (GPI, GPII).

**6.** Method according to Claim 2, **characterized in that** the first fuel is produced from the second fuel by separating off higher-value hydrocarbons (C2+).

**7.** Method according to Claim 6, **characterized in that** the higher-value hydrocarbons (C2+) which have been separated off are temporarily stored and added to the second fuel in partial load operation.

**8.** Method according to Claim 7, **characterized in that** the higher-value hydrocarbons (C2+) which have been separated off are liquefied before being temporarily stored, are temporarily stored as a liquid gas and are evaporated before being added.

**9.** Method according to Claim 2, **characterized in that** the second fuel is produced from the first fuel by adding higher-value hydrocarbons (C2+).

**10.** Method according to Claim 9, **characterized in that** the added higher-value hydrocarbons are taken from a local reservoir (22, 24, 43).

**11.** Method according to Claim 10, **characterized in that** the local reservoir is a liquid gas tank (22) and **in that** the liquid gas taken from the liquid gas tank (22) is evaporated in an evaporator (21) before being added.

12. Method according to Claim 10, **characterized in that** the local reservoir is a gas reservoir (24).

13. Method according to Claim 2, **characterized in that** the first and second fuels are produced from a third fuel whose content of higher-value hydrocarbons (C2+) is between those of the first and second fuels, and **in that** the first and second fuels are produced from the third fuel by separating off and, respectively, adding higher-value hydrocarbons (C2+).

14. Method according to Claim 13, **characterized in that** the higher-value hydrocarbons (C2+) separated off from the third fuel when producing the first fuel are temporarily stored and are released and added to the third fuel when producing the second fuel.

15. Method according to Claim 14, **characterized in that** the higher-value hydrocarbons (C2+) which have been separated off are liquefied before being temporarily stored, are temporarily stored as a liquid gas and are evaporated before being added.

16. Method according to one of Claims 1 to 15, **characterized in that** the fraction of higher-value hydrocarbons (C2+) in the second fuel is around 10% to 30% higher than in the first fuel.

17. Gas turbine installation (10, 30) for carrying out the method according to Claim 1, comprising a gas turbine (11, 31) having a compressor (12, 32), at least one combustion chamber (13, 35, 36) and at least one turbine (14, 33, 34), and a main fuel feed (17, 51, 52) which leads from a fuel source (16, GPI, GPII) to the at least one combustion chamber (13, 35, 36), wherein means are provided for changing, in a controlled manner, the composition of the fuel flowing through the main fuel feed (17, 51, 52), **characterized in that** the means comprise an auxiliary fuel feed (19, 53, 54) which opens into the main fuel feed (17, 51, 52) and which is connected to a reservoir (22, 24, 43) containing higher-value hydrocarbons (C2+).

18. Gas turbine installation according to Claim 17, **characterized in that** a controllable valve (20; CV3, CV4) is arranged in the auxiliary fuel feed (19, 53, 54) for adjusting the gas stream flowing through the auxiliary fuel feed (19, 53, 54).

19. Gas turbine installation according to either of Claims 17 and 18, **characterized in that** the reservoir containing higher-value hydrocarbons (C2+) is designed as a gas reservoir (24).

20. Gas turbine installation according to either of Claims 17 and 18, **characterized in that** the reservoir containing higher-value hydrocarbons (C2+) is designed as a liquid gas reservoir (22) and **in that** an evaporator (21) is arranged in the auxiliary fuel feed (19).

21. Gas turbine installation according to one of Claims 17 to 20, **characterized in that** in the main fuel feed (17, 51, 52) there is arranged a gas preparation installation (27, 45) which separates off higher-value hydrocarbons (C2+) from the gas flowing through the main fuel feed (17, 51, 52) and delivers these to the reservoir (22, 24, 43) containing higher-value hydrocarbons (C2+).

22. Gas turbine installation according to Claim 21, **characterized in that** the reservoir containing higher-value hydrocarbons (C2+) is designed as a liquid gas reservoir (22) and **in that** a gas liquefaction installation (28) is arranged between the gas preparation installation (27) and the liquid gas reservoir (22).

23. Gas turbine installation according to one of Claims 17 to 22, **characterized in that** there is a load regulator (39) which controls the change in composition of the fuel flowing through the main fuel feed (17, 51, 52) as a function of the required gas turbine power.

**Revendications**

1. Procédé pour faire fonctionner une turbine à gaz (11, 31), qui est alimentée en pleine charge avec un premier combustible, la turbine à gaz (11, 31) étant alimentée avec un deuxième combustible en charge partielle, pour améliorer le comportement en termes d'émissions, **caractérisé en ce que** le deuxième combustible présente, par rapport au premier combustible, une plus grande proportion d'hydrocarbures de plus haute qualité (C2+) avec au moins deux atomes de carbone par molécule, par exemple de l'éthane ($C_2H_6$) et du propane ($C_3H_8$).

2. Procédé selon la revendication 1, **caractérisé en ce que** l'on utilise en tant que premier et deuxième combustible des combustibles gazeux.

3. Procédé selon la revendication 2, **caractérisé en ce que** pour l'alimentation en le premier et le deuxième combustible, on utilise deux sources de gaz séparées (GPI, GPII) avec des compositions de gaz différentes en termes des hydrocarbures de plus haute qualité (C2+).

4. Procédé selon la revendication 3, **caractérisé en ce que** les deux combustibles sont prélevés directement des sources de gaz (GPI, GPII) et **en ce que** lors du passage entre la pleine charge et la charge partielle une commutation est effectuée entre la source de gaz ayant la plus faible proportion d'hydrocarbures de plus haute qualité (C2+) et la source de gaz ayant la plus grande proportion d'hydrocarbures de plus haute qualité (C2+).

5. Procédé selon la revendication 3, **caractérisé en ce que** les deux combustibles sont produits par un mélange différent des gaz provenant des deux sources de gaz (GPI, GPII).

6. Procédé selon la revendication 2, **caractérisé en ce que** le premier combustible est produit à partir du deuxième combustible par séparation des hydrocarbures de plus haute qualité (C2+).

7. Procédé selon la revendication 6, **caractérisé en ce que** les hydrocarbures de plus haute qualité séparés (C2+) sont entreposés et sont ajoutés au deuxième combustible en mode de charge partielle.

8. Procédé selon la revendication 7, **caractérisé en ce que** les hydrocarbures de plus haute qualité séparés (C2+) sont liquéfiés avant leur entreposage, sont entreposés sous forme de gaz liquéfié et sont évaporés avant leur ajout.

9. Procédé selon la revendication 2, **caractérisé en ce que** le deuxième combustible est produit à partir du premier combustible par ajout d'hydrocarbures de plus haute qualité (C2+).

10. Procédé selon la revendication 9, **caractérisé en ce que** les hydrocarbures de plus haute qualité ajoutés sont prélevés d'un réservoir local (22, 24, 43).

11. Procédé selon la revendication 10, **caractérisé en ce que** le réservoir local est un réservoir de gaz liquéfié (22), et **en ce que** le gaz liquéfié prélevé du réservoir de gaz liquéfié (22) est évaporé dans un évaporateur (21) avant d'être ajouté.

12. Procédé selon la revendication 10, **caractérisé en ce que** le réservoir local est un réservoir de gaz (24).

13. Procédé selon la revendication 2, **caractérisé en ce que** le premier et le deuxième combustible sont produits à partir d'un troisième combustible dont la teneur en hydrocarbures de plus haute qualité (C2+) est comprise entre celles du premier et du deuxième combustible, et **en ce que** le premier et le deuxième combustible sont produits à partir du troisième combustible par séparation ou par ajout d'hydrocarbures de plus haute qualité (C2+).

14. Procédé selon la revendication 13, **caractérisé en ce que** les hydrocarbures de plus haute qualité (C2+) séparés du troisième combustible lors de la production du premier combustible sont entreposés et, lors de la production du deuxième combustible, sont déchargés et ajoutés au troisième combustible.

15. Procédé selon la revendication 14, **caractérisé en ce que** les hydrocarbures de plus haute qualité séparés (C2+) sont liquéfiés avant leur entreposage, sont entreposés sous forme de gaz liquéfié et sont évaporés avant leur ajout.

16. Procédé selon l'une quelconque des revendications 1 à 15, **caractérisé en ce que** la proportion d'hydrocarbures de plus haute qualité (C2+) dans le deuxième combustible est supérieure d'environ 10 % à 30 % à celle du premier combustible.

17. Installation de turbine à gaz (10, 30) pour mettre en oeuvre le procédé selon la revendication 1, comprenant une turbine à gaz (11, 31) avec un compresseur (12, 32), au moins une chambre de combustion (13, 35, 36) et au moins une turbine (14, 33, 34), ainsi qu'une conduite d'alimentation de combustible principale (17, 51, 52), qui conduit d'une source de combustible (16, GPI, GPII) à l'au moins une chambre de combustion (13, 35, 36), des moyens étant prévus pour faire varier de manière commandée la composition du combustible s'écoulant à travers la conduite d'alimentation de combustible principale (17, 51, 52),
**caractérisée en ce que** les moyens comprennent une conduite d'alimentation de combustible supplémentaire (19, 53, 54) débouchant dans la conduite d'alimentation de combustible principale (17, 51, 52), laquelle est connectée à un réservoir (22, 24, 43) contenant des hydrocarbures de plus haute qualité (C2+).

18. Installation de turbine à gaz selon la revendication 17, **caractérisée en ce qu'**une soupape commandable (20 ; CV3, CV4) est disposée dans la conduite d'alimentation de combustible supplémentaire (19, 53, 54) pour l'ajustement du flux de gaz s'écoulant à travers la conduite d'alimentation de combustible supplémentaire (19, 53, 54).

19. Installation de turbine à gaz selon l'une quelconque des revendications 17 ou 18, **caractérisée en ce que** le réservoir contenant des hydrocarbures de plus haute qualité (C2+) est réalisé sous forme de réservoir de gaz (24).

20. Installation de turbine à gaz selon l'une quelconque des revendications 17 ou 18, **caractérisée en ce que** le réservoir contenant des hydrocarbures de plus haute qualité (C2+) est réalisé sous forme de réservoir de gaz liquéfié (22) et **en ce qu'**un évaporateur (21) est disposé dans la conduite d'alimentation de combustible supplémentaire (19).

21. Installation de turbine à gaz selon l'une quelconque des revendications 17 à 20, **caractérisée en ce qu'**une installation d'alimentation en gaz (27, 45) est disposée dans la conduite d'alimentation de combustible principale (17, 51, 52), laquelle sépare, à partir du gaz s'écoulant à travers la conduite d'alimentation de combustible principale (17, 51, 52), les hydrocarbures de plus haute qualité (C2+) et les délivre au réservoir (22, 24, 43) contenant des hydrocarbures de plus haute qualité (C2+).

**22.** Installation de turbine à gaz selon la revendication 21, **caractérisée en ce que** le réservoir contenant des hydrocarbures de plus haute qualité (C2+) est réalisé sous forme de réservoir de gaz liquéfié (22) et **en ce qu'**une installation de liquéfaction de gaz (28) est disposée entre l'installation d'alimentation en gaz (27) et le réservoir de gaz liquéfié (22).

**23.** Installation de turbine à gaz selon l'une quelconque des revendications 17 à 22, **caractérisée en ce qu'**un régulateur de charge (39) est prévu, lequel régule la variation de la composition du combustible s'écoulant à travers la conduite d'alimentation de combustible principale (17, 51, 52) en fonction de la puissance requise pour la turbine à gaz.

**Fig.1**

*Fig.2*

**49**

$\dot{m}_2$

*Last*

$\dot{m}_2, C2+_2$

$C2+_2$

*max*

*min*

*Last*

$\dot{m}_1$

*Last*

$\dot{m}_1, C2+_1$

$C2+_1$

*max*

*min*

*Last*

**50**

_39_

# Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5081844 A
- US 5454220 A
- EP 0351094 A1
- WO 03062618 A1

**In der Beschreibung aufgeführte Nicht-Patentliteratur**

- **VON F. JOOS et al.** Development of the sequential combustion system for the GT24/GT26 gas turbine family. *ABB Review,* 1998, vol. 4, 4-16